(19) Europäisches Patentamt
European Patent Office
Office européen des brevets

(11) **EP 4 120 643 A1**

(12) **EUROPEAN PATENT APPLICATION**
published in accordance with Art. 153(4) EPC

(43) Date of publication:
**18.01.2023 Bulletin 2023/03**

(21) Application number: **20924208.0**

(22) Date of filing: **12.03.2020**

(51) International Patent Classification (IPC):
**H04L 27/26** *(2006.01)*

(52) Cooperative Patent Classification (CPC):
**H04L 27/26**

(86) International application number:
**PCT/JP2020/010900**

(87) International publication number:
**WO 2021/181624 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **MATSUMURA, Yuki**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) According to an aspect of the present disclosure, there is provided a terminal including: a receiving section configured to receive information relating to channel state information (CSI)-reference signal (RS); and a control section configured to determine, for a port of at least one code division multiplexing (CDM) group, at least one of a reference signal sequence for the CSI-RS, an orthogonal cover code (OCC) for the CSI-RS, a specific code for decoding the OCC, and a resource that does not overlap with a specific CSI-RS resource based on the information. According to an aspect of the present disclosure, measurement accuracy of CSI-RS can be improved.

FIG. 8

EP 4 120 643 A1

**Description**

Technical Field

The present disclosure relates to a terminal, a radio communication method, and a base station in next-generation mobile communication systems.

Background Art

In the universal mobile telecommunications system (UMTS) network, the specifications of long term evolution (LTE) have been drafted for the purpose of further increasing data rates, providing low delays, and the like (Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

In the existing LTE systems (for example, 3GPP Rel. 8 to 14), a user terminal (User Equipment (UE)) uses at least one of a UL data channel (for example, Physical Uplink Shared Channel (PUSCH)) or a UL control channel (for example, Physical Uplink Control Channel (PUCCH)) to transmit Uplink Control Information (UCI).

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

Summary of Invention

Technical Problem

In a radio communication system (for example, Rel. 15 NR), a plurality of channel state information (CSI)-reference signals (RS) are multiplexed with each other by using at least one of time division multiplexing (TDM), frequency division multiplexing (FDM), and code division multiplexing (CDM), and are respectively transmitted by using a plurality of CSI-RS ports.

However, it is conceivable that measurement (estimation, tracking) accuracy is reduced due to interference of a plurality of CSI-RSs transmitted on the same resource element (RE). When the measurement accuracy of the CSI-RS decreases, system performance may deteriorate.

Therefore, an object of the present disclosure is to provide a terminal, a radio communication method, and a base station that improve the measurement accuracy of the CSI-RS.

Solution to Problem

According to an aspect of the present disclosure, there is provided a terminal including: a receiving section configured to receive information relating to channel state information (CSI)-reference signal (RS); and a control section configured to determine, for a port of at least one code division multiplexing (CDM) group, at least one of a reference signal sequence for the CSI-RS, an orthogonal cover code (OCC) for the CSI-RS, a specific code for decoding the OCC, and a resource that does not overlap with a specific CSI-RS resource based on the information.

Advantageous Effects of Invention

According to an aspect of the present disclosure, measurement accuracy of CSI-RS can be improved.

Brief Description of Drawings

Fig. 1 is a diagram illustrating an example of CSI-RS positions in existing slots and RBs.

Figs. 2A to 2D are diagrams illustrating an example of FD-OCC and TD-OCC.
Fig. 3 is a diagram illustrating an example of CSI-RS positions for each number of ports.
Fig. 4 is a diagram illustrating an example of mapping of 32 port CSI-RSs.
Fig. 5 is a diagram illustrating an example of a CDM group.
Fig. 6 is a diagram illustrating an example of CSI-RS positions in a slot and an RB.
Figs. 7A and 7B are diagrams illustrating an example of association between a PN sequence sample and a CDM group.
Fig. 8 is a diagram illustrating an example of mapping from a PN sequence to a physical resource in Scenario 1.
Fig. 9 is a diagram illustrating an example of mapping from a PN sequence to a physical resource in Scenario 2.
Fig. 10 is a diagram illustrating an example of an OCC problem.
Fig. 11 is a diagram illustrating an example of arrangement of CSI-RS resources for new UEs and CSI-RS resources for existing UEs.
Fig. 12 is a diagram illustrating another example of arrangement of a CSI-RS resource for new UE and a CSI-RS resource for existing UE.
Figs. 13A and 13B are diagrams illustrating an example of a method of performing notification of a start index of an OCC for each CDM group.
Figs. 14A and 14B are diagrams illustrating an example of a method of performing notification of an OCC index for each port.
Figs. 15A to 15C are diagrams illustrating an example of a method of performing notification of an OCC using a cyclic shift.
Fig. 16 is a diagram illustrating an example of a case where the same reference signal sequence is used among a plurality of cells.
Fig. 17 is a diagram illustrating an example of OCC multiplication over an OCC decoding range.
Fig. 18 is a diagram illustrating an example of a schematic configuration of a radio communication system according to one embodiment.
Fig. 19 is a diagram illustrating an example of a configuration of a base station according to one embodiment.
Fig. 20 is a diagram illustrating an example of a configuration of a user terminal according to one embodiment.
Fig. 21 is a diagram illustrating an example of a hardware configuration of the base station and the user terminal according to one embodiment.

Description of Embodiments

(CSI-RS)

In Rel. 15, CSI-RSs of a plurality of ports are multiplexed by using at least one of frequency division multiplexing (FDM), time division multiplexing (TDM), and code division multiplexing (CDM (frequency domain OCC, time domain OCC)). The CSI-RS supports up to 32 ports.
The multi-port CSI-RS is used, for example, for orthogonalization of a multi-input multi-output (MIMO) layer. For example, different DMRS ports are configured for each layer for single-user MIMO. For multi-user MIMO, different DMRS ports are configured per layer and per UE within a UE.
In Rel. 15, a CSI-RS supports up to 32 ports by at least one of a time domain OCC and a frequency domain OCC (maximum 4 in time direction and maximum 2 in frequency direction), FDM, and TDM.
In Rel. 15, for example, a CSI-RS is used as a DL RS for at least one of channel state information (CSI) acquisition, beam management (BM), beam failure recovery (BFR), and time and frequency fine tracking. The CSI-RS supports 1, 2, 4, 8, 12, 16, 24, and 32 ports (antenna port, CSI-RS port). The CSI-RS supports periodic, semi-persistent, and aperiodic transmission. In order to adjust overhead and CSI estimation accuracy, a frequency density of the CSI-RS can be set.

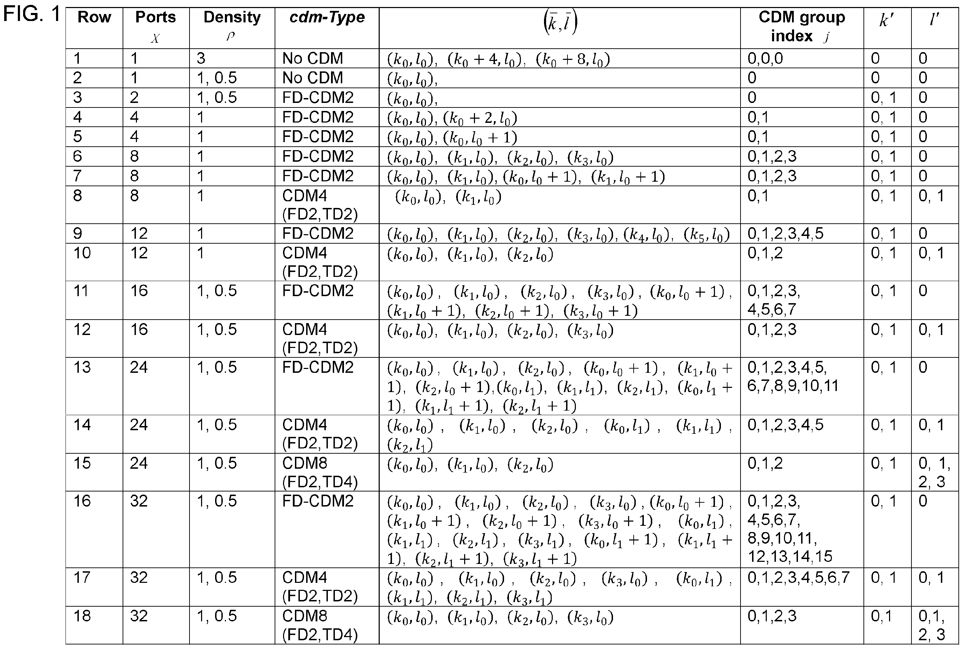

Fig. 1 is a diagram illustrating an example of a CSI-RS location in a slot. Each row in the table indicates a row number, a number of ports, a density of a frequency domain, a CDM type, a time and frequency (time/frequency) location (location of Component Resource (CDM group) (k bar, l bar)), a CDM group index, and each resource location ((RE, symbol), (k', l')) in a component resource. Here, the time/frequency location is a location of a time and frequency resource (component resource) of the CSI-RS corresponding to one port. The k bar is a notation in which an overline is added to "k". The k bar indicates the start resource element (RE) index of the component resource, and the l bar indicates the start symbol (OFDM symbol) index of the component resource.
There are no CDM (No CDM, N/A), FD-CDM2, CDM4, and CDM8 as the CDM groups. The FD-CDM2 multiplexes two-port CSI-RSs at the same time and frequency by multiplying the length-2 frequency domain (FD)-orthogonal cover code (OCC) in units of REs (FD2). The CDM4 multiplies the length-2 FD-OCC and the length-2 time domain (TD)-OCC in units of RE unit symbols to multiplex 4-port CSI-RSs at the same time and frequency (FD2TD2). The CDM8 multiplies the length-2 FD-OCC and the length-4 TD-OCC in units of RE unit symbols to multiplex the 8-port CSI-RS at the same time and frequency (FD2TD4).

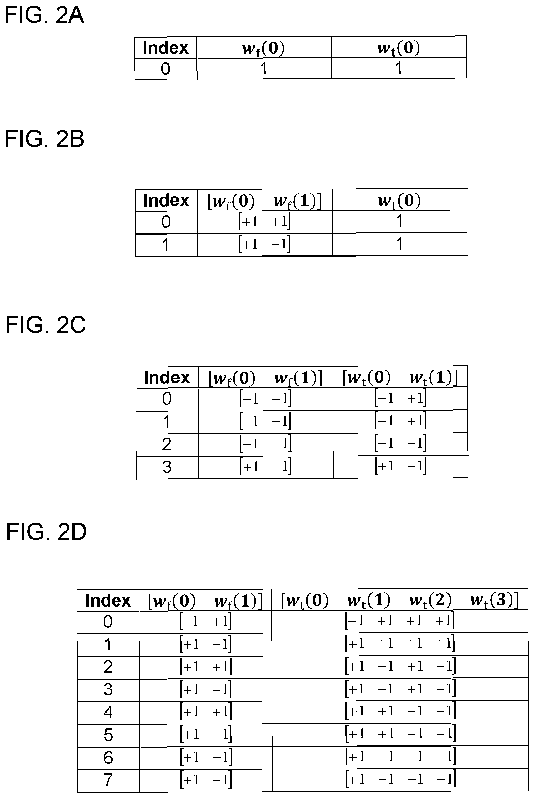

Figs. 2A to 2D are diagrams illustrating an example of FD-OCC and TD-OCC. The sequence of FD-OCC is represented by $w_f(k')$, and the sequence of TD-OCC is represented by $w_t(k')$. Fig. 2A illustrates a case in which the CDM type is no CDM. Fig. 2B illustrates a case in which the CDM type is FD-CDM2. Fig. 2C illustrates a case in which the CDM type is CDM4. Fig. 2D illustrates a case in which the CDM type is CDM8.

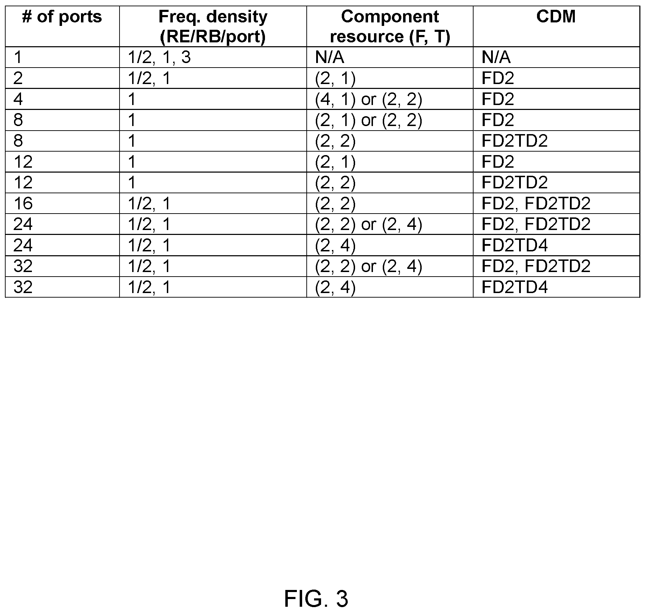

Fig. 3 is a diagram illustrating an example of CSI-RS locations for each number of ports based on Fig. 1. This figure illustrates, for each number of ports, the frequency density, the component resource size (size in frequency direction [RE], size in time direction [symbol]), and the CDM type.

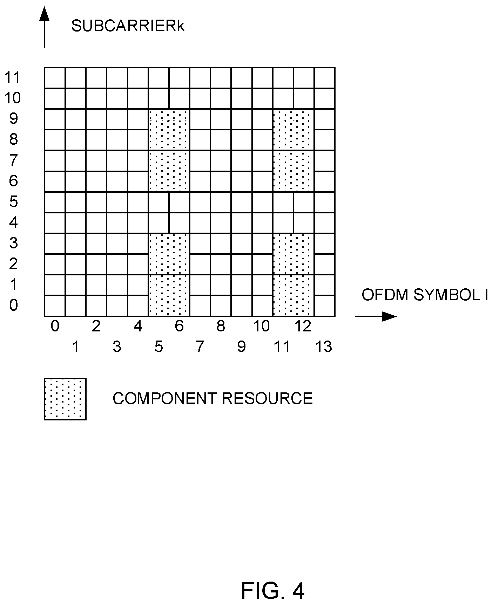

For example, Fig. 4 illustrates an example of resource element (RE) mapping of CSI-RS in which the number of ports is set to 32 and the component resource size is set to 2 subcarriers × 2 symbols (row index 17 in Fig. 1). In the frequency domain and the time domain of 1 physical resource block (PRB) × 1 slot, four component resources of 2 subcarriers × 2 symbols are multiplexed (frequency division multiplexing (FDM)) in the frequency domain and two component resources are multiplexed (time division multiplexing (TDM)) in the time domain, whereby 4 × 2 component resources are mapped. Further, by multiplying the CSI-RS in each component resource by the FD-OCC of the length-2 subcarrier and the TD-OCC of the length-2 symbol, four CSI-RSs are multiplexed (code division multiplexing (CDM)) (CDM4 (FD2TD2)). Therefore, a CSI-RS of 32 ports is transmitted on a resource of 1 PRB × 1 slot.

The UE assumes that all CSI-RS resources of the resource set are configured with a same starting RB and a same number of RBs and a same CDM type.

In NR, NZP-CSI-RS is used for time/frequency tracking, CSI calculation, L1-RSRP/SINR calculation, and mobility.

The UE may report the PMI of a neighboring cell of a handover destination immediately before the handover. In this case, the throughput of the PDSCH immediately before the handover is degraded. Since the CSI-RS is not orthogonal between the cells, the UE reports the PMI of the peripheral cell (another cell) assuming that the cell is connected (own cell).

Sequence generation for NZP-CSI-RS is based on a pseudo-random (Pseudo-Random, Pseudo-Noise (PN)) sequence defined by the following formula.
[Math. 1]

Equation (1)

$$r(m) = \frac{1}{\sqrt{2}}\left(1 - 2 \cdot c(2m)\right) + j\frac{1}{\sqrt{2}}\left(1 - 2 \cdot c(2m+1)\right)$$

c(n) is defined by the following formula.
[Math. 2]

Equation (2)

$$c(n) = \left(x_1(n + N_C) + x_2(n + N_C)\right) \bmod 2$$
$$x_1(n + 31) = \left(x_1(n + 3) + x_1(n)\right) \bmod 2$$
$$x_2(n + 31) = \left(x_2(n + 3) + x_2(n + 2) + x_2(n + 1) + x_2(n)\right) \bmod 2$$

$$c_{\text{init}} = \sum\nolimits_{i=0}^{30} x_2(i) \cdot 2^i$$

$N_C$ = 1600. The first m-sequence $x_1(n)$ is initialized by x1(0) = 1, x1(n) = 0, n = 1, 2,..., 30. The second m-sequence $x_2(n)$ is initialized by $C_{\text{init}}$. $C_{\text{init}}$ differs depending on the application destination of the sequence. The pseudo-random sequence generator for the CSI-RS sequence r(m) is initialized at the start of each OFDM symbol by $C_{\text{init}}$ of the following formula:
[Math. 3]

Equation (3)

$$c_{\text{init}} = \left(2^{10}\left(N_{\text{symb}}^{\text{slot}} n_{\text{s,f}}^{\mu} + l + 1\right)(2n_{\text{ID}} + 1) + n_{\text{ID}}\right)\bmod 2^{31}$$

$n_{\text{s,f}}^{\mu}$ is a slot number in the radio frame. l is an OFDM symbol number in the slot. The $n_{\text{ID}}$ is equal to the scrambling ID parameter (higher layer parameter scramblingID) or the sequence generation setting parameter (higher layer parameter sequenceGenerationConfig). $n_{\text{symb}}^{\text{slot}}$ is the number of symbols per slot.

For each configured CSI-RS, when the condition is met, the UE assumes that the sequence r(m) is mapped to resource element (RE)(k,l)$_{p,\mu}$ according to the following formula:

[Math. 4]

Equation (4)

$$a_{k,l}^{(p,\mu)} = \beta_{\text{CSIRS}} w_f\left(k'\right) \cdot w_t\left(l'\right) \cdot r_{l,n_{\text{s,f}}}\left(m'\right)$$

$$m' = \lfloor n\alpha \rfloor + k' + \left\lfloor \frac{\bar{k}\rho}{N_{\text{sc}}^{\text{RB}}} \right\rfloor$$

$$k = nN_{\text{sc}}^{\text{RB}} + \bar{k} + k'$$

$$l = \bar{l} + l'$$

$$\alpha = \begin{cases} \rho & \text{for } X = 1 \\ 2\rho & \text{for } X > 1 \end{cases}$$

$$n = 0, 1, \ldots$$

The condition is that resource elements (k,l)$_{p,\mu}$ are in a resource block occupied by a CSI-RS resource on which the UE is configured. A reference point for k = 0 is a subcarrier 0 in the common resource block 0. ρ is given by a higher layer parameter density in the CSI-RS-ResourceMapping information element (IE) or the CSI-RS-CellMobility IE. The number of ports X is given by the higher layer parameter nrofPorts. k is an index (location) of the frequency domain (subcarrier) with respect to a reference point. l is an index (location) of a time domain (symbol) with respect to the reference point. p is an antenna port index. μ is a subcarrier spacing setting.

For NZP-CSI-RS, the UE assumes that $\beta_{\text{CSIRS}} > 0$ is satisfied. $\beta_{\text{CSIRS}}$ is the power offset specified by the higher layer parameter powerControlOffsetSS in the NZP-CSI-RS-Resource IE if provided. $w_f(k')$ is the FD-OCC associated with the CDM group. $w_t(l')$ is the TD-OCC associated with the CDM group. $r_{l,n_{\text{s,f}\mu}}(m')$ are PN sequences initialized in the symbol l of the slots $n_{\text{s,f}}^{\mu}$. k' is a subcarrier index of an RE in the CDM group. l' is a symbol index of an RE in the CDM group. $N_{\text{sc}}^{\text{RB}}$ is the number of subcarriers per RB.

In addition, the RE position of the CSI-RS is common between cells. Even if different scrambling IDs are configured for each cell, inter-sequence interference (inter-cell interference) of CSI-RS may be high. Generally, it is assumed that interference of CSI-RSs between cells is low, and CSI-RSs are mapped to a same RE between a plurality of cells. Even if different scrambling IDs are configured between a plurality of cells, inter-cell interference occurs because finite-length PN sequences are not orthogonal (is not an orthogonal sequence, is a pseudo-orthogonal sequence, or is a non-fully orthogonal sequence.).

The generated PN sequence is common to all the ports.

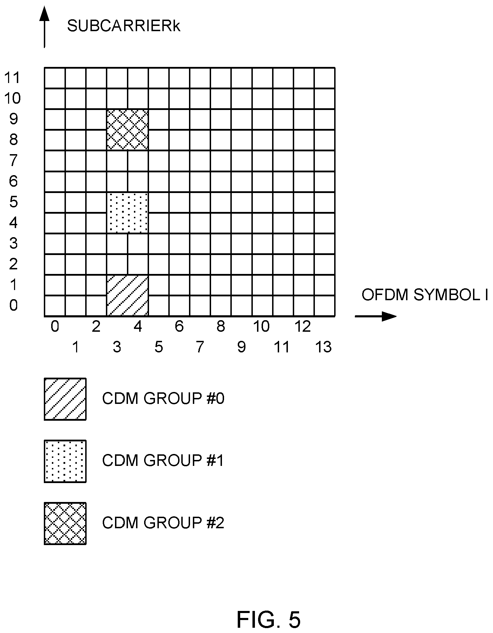

12 CSI-RS ports are assumed. In a case where row in Fig. 1 is 12, $k_0 = 0$, $k_1 = 4$, $k_2 = 8$, and $l_0 = 3$, the CDM groups #0, #1, and #2 as illustrated in Fig. 5 are used. In this case, the total of 12 ports uses the following two PN sequences $r_{l,\text{ns,f}\mu}(m')$ .

- The PN sequence $r_{3,\text{ns,f}\mu}(m')$ for the third OFDM symbol is [$r_3(0)$, $r_3(1)$,...].
- The PN sequence $r_{4,\text{ns,f}\mu}(m')$ for the fourth OFDM symbol is [$r_4(0)$, $r_4(1)$,...].

For a port in each CDM group, a different sample (value, element) is selected from these PN sequences. For example, [$r_3(0)$,$r_3(4)$,$r_4(1)$,$r_4(9)$] is selected for the CDM group #0, and [$r_3(1)$,$r_3(5)$,$r_4(0)$,$r_4(10)$] is selected for the CDM group #1.

Because all ports use the same PN sequence, neighboring cells may use the same PN sequence. In this case, accuracy of channel estimation based on the CSI-RS is low.

In Rel. 15, an antenna port number p used to transmit a CSI-RS, a CDM group index j, and a sequence index (OCC index) s of an OCC are associated by the following formula.

[Math. 5]

$$Equation\ (5)$$

$$p = 3000 + s + jL;$$

$$j = 0, 1, ..., \frac{N}{L} - 1$$

$$s = 0, 1, ..., L - 1;$$

Here, L is a CDM group size. N is the number of CSI-RS ports. One OCC index s is associated with one FD-OCC and one TD-OCC.

That is, for the port number p in ascending order, the OCC index s of the CDM group #0 is first associated in ascending order, and the OCC index s of the next CDM group #1 is associated in ascending order. Thus, in Rel. 15, the association between each port in one CDM group and the OCC index does not change.

CSI-RS resources may be shared/common among a plurality of UEs. The Rel. 15 UE may only generate a reference signal sequence of Rel. 15 for the CSI-RS. It is not clear how to enable coexistence of existing (for example, Rel. 15) and new (for example, Rel. 16 or later) UEs. In addition, it is not clear how the UE recognizes the reference signal sequence for the CDM group.

If at least one of the reference signal sequence and the OCC of the CSI-RS is not appropriately determined, it is conceivable that measurement accuracy is reduced due to interference of a plurality of CSI-RSs transmitted on a same RE. When the measurement accuracy of the CSI-RS decreases, system performance may deteriorate.

Therefore, the present inventors have conceived a method for reducing interference between a plurality of CSI-RSs.

Hereinafter, embodiments according to the present disclosure will be described in detail with reference to the drawings. The radio communication method according to each of the above aspects may be applied independently, or may be applied in combination of at least two thereof.

In the present disclosure, "A/B" and "at least one of A or B" may be interchangeable. In the present disclosure, a cell, a component carrier (CC), a carrier, a bandwidth part (BWP), and a band may be replaced with each other. In the present disclosure, the index, the ID, the indicator, and the resource ID may be replaced with each other. In the present disclosure, the RRC parameter, the higher layer parameter, the RRC information element (IE), the RRC message, the RRC signaling, and the higher layer signaling may be replaced with each other.

In the present disclosure, the port, the CSI-RS port, and the antenna port may be replaced with each other. In the present disclosure, the CSI-RS resource, the CSI-RS setting, and the time and frequency resources for the CSI-RS may be replaced with each other.

(Radio Communication Method)

In the present disclosure, the scrambling ID, the scramblingID, the sequence generation setting, the sequence-GenerationConfig, the cell ID, the pseudo cell ID, the virtual cell ID, and the nID may be replaced with each other.

In the present disclosure, a resource, a CDM group, a CSI-RS port, a cell, a parameter, and an index may be replaced with each other.

In the present disclosure, a CDM group may be a plurality of CSI-RS resources orthogonalized by at least one of a time domain OCC and a frequency domain OCC in a same RE.

In the present disclosure, measurement, estimation, calculation, CSI calculation, tracking, L1-RSRP/SINR calculation, and mobility and channel estimation may be replaced with each other.

The UE may receive information about the CSI-RS. The information about the CSI-RS may be at least one of a CSI-RS resource for existing UE, a new UE sulfur CSI-RS resource, information about a reference signal sequence (scrambling ID) for each CDM group/port, information about an OCC for each CDM group/port, and information about an OCC decoding range.

The UE may measure a CSI-RS to which at least one of the following embodiments is applied.

<First Embodiment>

For a plurality of resources, a resource specific PN sequence may be generated. Different PN sequences may be generated among the plurality of resources.

Different scrambling IDs may be allocated to the plurality of resources. A resource specific $C_{init}$ may be determined by the scrambling ID, and a resource specific PN sequence may be generated.

<<Embodiment 1-1>>

For the CDM group, a CDM group-specific PN sequence may be generated. Different PN sequences may be generated among the plurality of CDM groups.

Different scrambling IDs may be assigned to the plurality of CDM groups. With this scrambling ID, a CDM group-specific $C_{init}$ may be determined, and a CDM group-specific PN sequence may be generated.

The UE may determine the scrambling ID for the CSI-RS sequence according to any one of the following scrambling ID determination methods 1 and 2.

[Scrambling ID Determination Method 1]

Scrambling ID information (scramblingID) for each CDM group may be configured by the RRC parameter.

[Scrambling ID Determination Method 2]

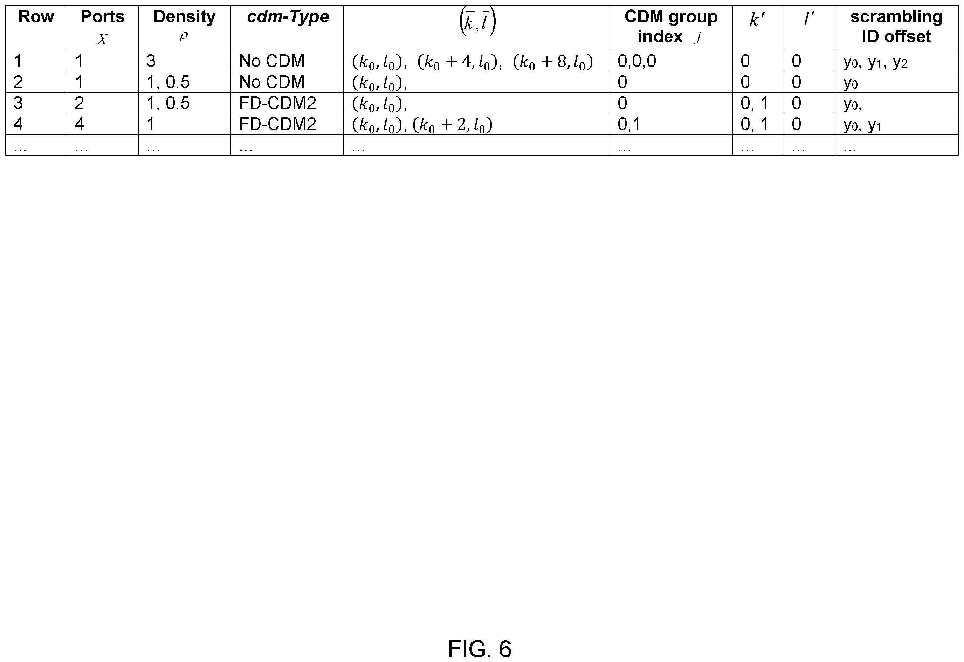

The UE may identify a scrambling ID specific to each CDM group based on scrambling ID information (scramblingID) and a specific parameter x that are provided in the CSI-RS resource. For example, as illustrated in Fig. 6, a scrambling ID offset $y_i$ may be added to the table in Fig. 1. The specific parameter x may be the number of ports. A scrambling ID offset $y_i$ may be associated with the CDM group i. The UE may determine the scrambling ID specific to the CDM group by determining a scrambling ID offset $y_i$ for each CDM group based on the specific parameter x, and adding $y_i$ to the configured scrambling ID information.

As a result, it is possible to reduce the probability of using a CSI-RS sequence having a high correlation with a CSI-RS sequence of a neighboring cell among a plurality of CDM groups. In addition, in at least some CSI-RS ports, a probability of using a CSI-RS sequence having a low correlation with a CSI-RS sequence of a neighboring cell can be increased.

<<Embodiment 1-2>>

For a CSI-RS port (antenna port), a PN sequence of the CSI-RS port may be generated. Different PN sequences may be generated among a plurality of CSI-RS ports.

Different scrambling IDs may be assigned to a plurality of CSI-RS ports. The scrambling ID may determine a CSI-RS port specific $C_{init}$ and generate a CSI-RS port specific PN sequence.

The UE may determine the scrambling ID for the CSI-RS sequence according to any one of the following scrambling ID determination methods 1 and 2.

[Scrambling ID Determination Method 1]

Scrambling ID information (scramblingID) for each CSI-RS port may be configured by RRC parameters.

[Scrambling ID Determination Method 2]

The UE may identify a scrambling ID specific to each CSI-RS port based on scrambling ID information (scramblingID) provided in the CSI-RS resource and a specific parameter x. For example, the scrambling ID offset $y_i$ may be added to the table in Fig. 1. The specific parameter x may be the number of ports. A scrambling ID offset $y_i$ may be associated with the CSI-RS port i. The UE may determine the scrambling ID specific to the CSI-RS ports by determining a scrambling ID offset $y_i$ for each CSI-RS port based on the determining parameter x, and adding $y_i$ to the configured scrambling ID information.

As a result, it is possible to reduce the probability of using a CSI-RS sequence having a high correlation with a CSI-RS sequence of a neighboring cell in all CSI-RS ports (for example, 32 ports). In addition, in at least some CSI-RS ports, a probability of using a CSI-RS sequence having a low correlation with a CSI-RS sequence of a neighboring cell can be increased.

<Second Embodiment>

In a CSI-RS design in existing NR, all cells use a same time/frequency resource for the CSI-RS. This may cause the plurality of cells to use samples of the same index from the generated PN sequence. For example, a cell i and a cell j use samples with the same index for CDM group 2. The cell i selects $[r_3^i(0), r_3^i(4), r_4^i(1), r_4^i(9)]$ for the CDM group 2, and the cell j selects $[r_3^j(0), r_3^j(4), r_4^j(1), r_4^j(9)]$ for the CDM group 2. In this case, the same PN sequence is used between the cells i and j, and the inter-cell interference increases.

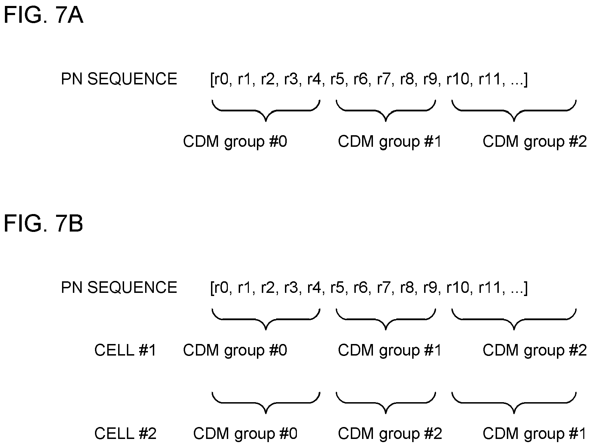

In the existing NR, for example, as illustrated in Fig. 7A, association between a PN sequence sample index and a CDM group is common to all cells.

As illustrated in Fig. 7B, associations between PN sequence sample indexes and CDM groups may be different among the plurality of cells. This association may be specified in a specification or may be configured by an RRC parameter. The PN sequence sample index associated with one CDM group may be contiguous or non-contiguous (may be equidistant).

Association between the PN sequence sample index and the CSI-RS port may be different among the plurality of cells. This association may be specified in a specification or may be configured by an RRC parameter. The PN sequence sample index associated with one CSI-RS port may be contiguous or non-contiguous (may be equidistant).

Mapping of the PN sequence sample index to the RE may be different among the plurality of cells. This mapping may be specified in the specification or may be configured by the RRC parameter.

The plurality of cells may use samples with different indices from the PN sequence.

A cell-specific value $f(x_{cell})$ may be added to the sample index m' of the PN sequence. For example, the sample index m' of the PN sequence may be represented by the following formula.
[Math. 6]

$$\text{Equation (6)}$$

$$m' = \lfloor n\alpha \rfloor + k' + \left\lfloor \frac{\overline{k}\rho}{N_{sc}^{RB}} \right\rfloor + f(x_{cell})$$

$f(x_{cell})$ may be the scrambling ID.

$f(x_{cell})$ may be the CSI-RS port index.

$f(x_{cell})$ may be the CDM group index of the CSI-RS.

According to the second embodiment described above, even when the same PN sequence is used among the plurality of cells, interference can be reduced by using samples having different PN sequences.

<Third Embodiment>

A plurality of scrambling IDs may be configured by the RRC parameter. The number of scrambling IDs may be two or another number. The plurality of scrambling IDs may be a scrambling ID list.

One of the plurality of configured scrambling IDs may be given in instruction (switched) based on the A-CSI-RS or downlink control information (DCI) triggering A-CSI reporting.

The instruction of the scrambling ID based on the DCI may be a new field added in a new release, may be replacement (interpretation) of an existing field, or may be an implicit instruction. The implicit instruction may be based on at least one of an initial control channel element (CCE) index, an initial PRB index, and an initial RE index of a PDCCH carrying the DCI.

The UE may assume that when the plurality of scrambling IDs (a specific number of scrambling IDs) are configured for the CSI-RS resource, there is a new field; otherwise, there is no new field (a new field size is 0 bits).

The plurality of scrambling IDs may be configured for each of the plurality of resources. The UE may determine one scrambling ID for each resource based on the DCI. The UE may determine different scrambling IDs among the plurality of resources according to the first embodiment. The plurality of scrambling IDs may be configured for each CDM group. The plurality of scrambling IDs may be configured for each CSI-RS port.

According to the third embodiment described above, the scrambling ID can be dynamically changed, and the CSI sequence can be changed according to the interference situation.

<Fourth Embodiment>

The UE may report, by UE capability information, that it supports at least one of the functions described in the first to third embodiments.

The UE that reported supporting the function may apply the function. UEs that do not report supporting the function may perform Rel. 15 operations.

According to the fourth embodiment described above, the UE can appropriately operate according to the capability.

<Fifth Embodiment>

The mapping from the PN sequence to the physical resource may be according to any one of scenarios 1 and 2.

<<Scenario 1>>

For the existing UE, the PN sequence generated by the existing scrambling ID (scramblingID) is mapped to a plurality of CDM groups. For the new UE, a PN sequence generated by the new scrambling IDj (j = 0, 1,...) (scramblingID0, scramblingID1,...) is mapped to a CDM group j.

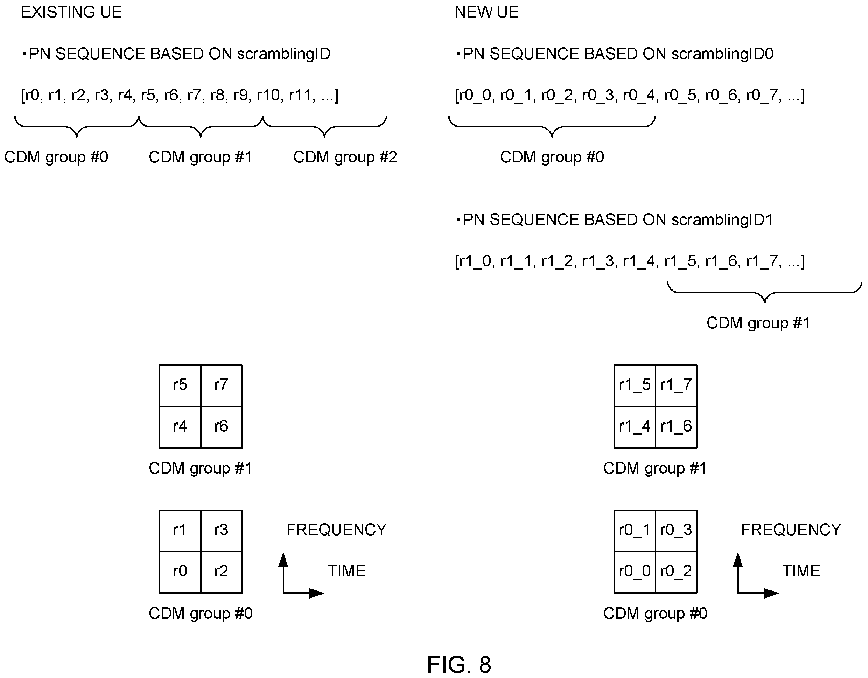

In the example of Fig. 8, for the existing UE, a sample [r0, r1,...] of the PN sequence is generated by the scramblingID. [r0, r1, r2, r3] is mapped to a resource of the CDM group #0, and [r4, r5, r6, r7] is mapped to a resource of the CDM group #1.

For the new UE, a sample [r0_0, r0_1,...] of the PN sequence is generated by the scramblingID0, and a sample [r1_0, r1_1,...] of the PN sequence is generated by the scramblingID1. [r0_0, r0_1, r0_2, r0_3] is mapped to the CDM group #0, and [r1_4, r1_5, r1_6, r1_7] is mapped to the CDM group #1.

In this example, each CDM group consists of 2 symbols by 2 subcarriers of REs. For REs of one CDM group, samples of the PN sequence are mapped first in a frequency direction and second in a time direction. For example, for the existing UE, [r0, r1] is mapped in the frequency direction and [r2, r3] is mapped in the frequency direction by moving in the time direction with respect to the RE of the CDM group #0.

The direction in which the sample of the PN sequence is mapped to the RE of the CDM group is not limited to this example. For example, for REs of one CDM group, samples of the PN sequence may be mapped first in a time direction and may be mapped second in a frequency direction.

<<Scenario 2>>

For the existing UE, the PN sequence generated by the existing scrambling ID (scramblingID) is mapped to a plurality of CDM groups. For a new UE, a PN sequence generated by the existing scrambling ID (scramblingID) is mapped to a CDM group #0, and a PN sequence generated by a new scrambling IDj (j = 1, 2,...) (scramblingID1, scramblingID2,...) is mapped to a CDM group j.

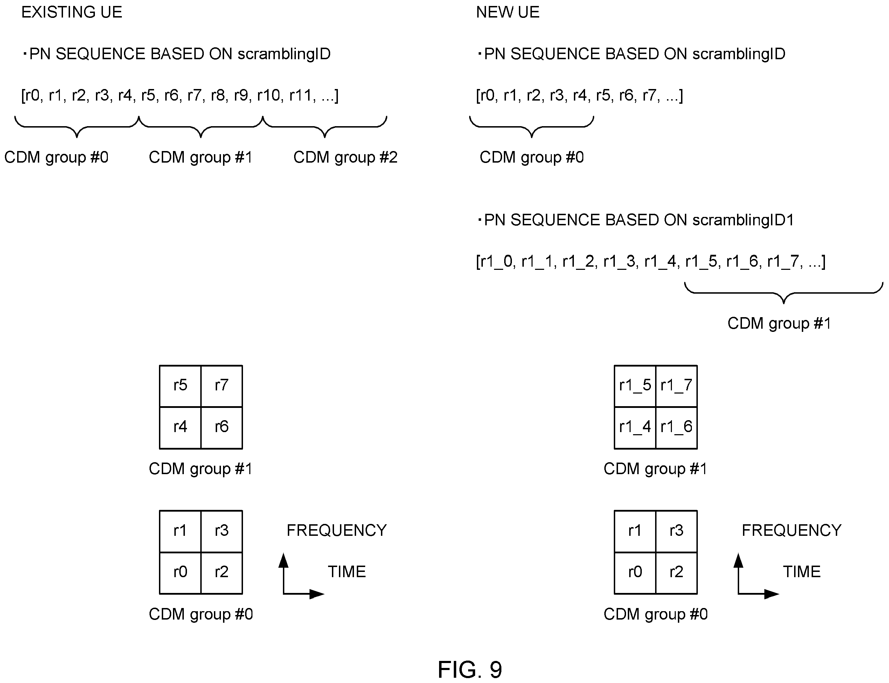

In the example of Fig. 9, for the existing UE, a sample [r0, r1,...] of the PN sequence is generated by the scramblingID. [r0, r1, r2, r3] is mapped to a resource of the CDM group #0, and [r4, r5, r6, r7] is mapped to a resource of the CDM group #1.

For the new UE, a sample [r0, r1,...] of the PN sequence is generated by the scramblingID, and a sample [r1_1, r1_2,...] of the PN sequence is generated by the scramblingID1. [r0, r1, r2, r3] is mapped to the CDM group #0, and [r1_4, r1_5, r1_6, r1_7] is mapped to the CDM group #1.

The PN sequence of the CDM group #0 can be shared between the existing UE and the new UE.

According to the fifth embodiment described above, an appropriate CSI-RS sequence can be configured for each of the existing UE and the new UE.

<Sixth Embodiment>

The plurality of ports can be orthogonalized by multiplying the reference signal sequence (reference-signal sequence, PN sequence, pseudo-random sequence, base sequence) for the CSI-RS by the OCC.

When a plurality of CSI-RSs transmitted at a same time and a same frequency use a same reference signal sequence and the plurality of CSI-RSs are multiplied by different OCCs, the plurality of CSI-RSs are orthogonal to each other. The UE may decompose the plurality of received signals.

When the plurality of CSI-RSs transmitted at the same time and the same frequency use different reference signal sequences and the plurality of CSI-RSs are multiplied by different OCCs, the plurality of CSI-RSs are not orthogonal to each other. In order for the UE to decompose the plurality of received signals, processing becomes complicated.

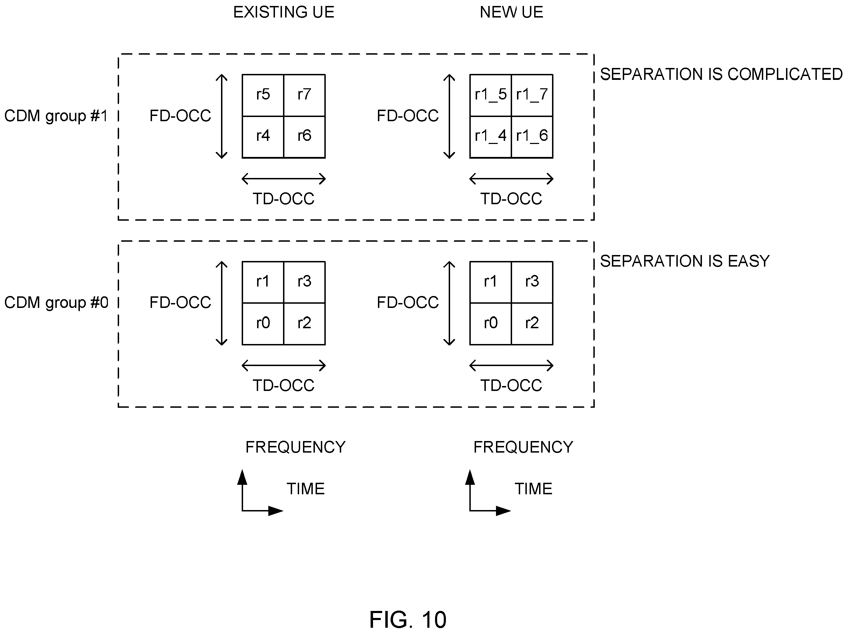

In the example of Fig. 10, each resource of the CDM groups #0 and #1 is 4 REs (2 symbols × 2 subcarriers).

The same reference signal sequence is mapped to the CDM group #0 of the existing UE and the CDM group #0 of the new UE. Further, the CDM group #0 of the existing UE and the CDM group #0 of the new UE are multiplied by at least one of different TD-OCCs and different FD-OCCs. In this case, since the CDM group #0 of the existing UE and the CDM group #0 of the new UE are orthogonal to each other, it is easy for the existing UE and the new UE to separate the CDM group #0 of the existing UE and the CDM group #0 of the new UE.

Different reference signal sequences are mapped to the CDM group #1 of the existing UE and the DCM group #1 of the new UE. The CDM group #1 of the existing UE and the CDM group #1 of the new UE are multiplied by at least one of different TD-OCCs and different FD-OCCs. In this case, since the CDM group #1 of the existing UE and the CDM group #1 of the new UE are not orthogonal, processing in which the existing UE and the new UE separate the CDM group #1 of the existing UE and the CDM group #1 of the new UE is complicated.

The CSI-RS resource for the new UE may be according to at least one of the following time/frequency resources 1 and 2.

<<Time/Frequency Resource 1>>

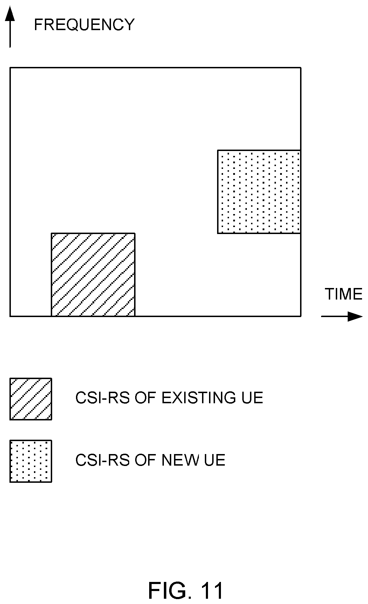

The CSI-RS resource for the new (for example, Rel. 16 or later) UE may differ from the CSI-RS resource for the existing (for example, Rel. 15) UE in at least one of time and frequency (Fig. 11). Measurement accuracy can be improved as compared with a case where the CSI-RS resources overlap in time and frequency.

The new UE may follow any of the following rules 1 to 3.

<<Rule 1>>

The new UE may not assume that the CSI-RS resource overlapping with the CSI-RS resource for the existing UE in time and frequency is configured. The new UE may not assume that a plurality of CSI-RS resources overlapping each other in time and frequency are configured. The new UE may not assume that the CSI-RS resource is configured that overlap in time and frequency with the CSI-RS resource for other UE.

<<Rule 2>>

The new UE may not assume that the CSI-RS resource for the new UE and the CSI-RS resource for the existing UE overlap in time and frequency. The new UE configured with the plurality of CSI-RS resources overlapping in time and frequency may not receive the overlapping part of some (one of the two CSI-RS resources) CSI-RS resources (the part may be ignored or the priority of the measurement of the part may be lowered).

Some CSI-RS resources may be CSI-RS resources for existing UEs. By using the CSI-RS resource for the new UE, there is a possibility that good characteristics can be obtained.

Some CSI-RS resources may be CSI-RS resources for a new UE. As a result, the base station does not need to stop transmitting the CSI-RS for the existing UE.

Some CSI-RS resources may be A-CSI-RS resources. The base station does not need to stop sending the P-CSI-RS.

Some CSI-RS resources may be P-CSI-RS resources. The base station does not need to stop sending (critical) A-CSI-RSs that are triggered when needed.

The some CSI-RS resources may be CSI-RS resources with less measurement requirements.

<<Rule 3>>

Among the CSI-RS resources for new UEs, the CSI-RS resource in the CDM group #0 may overlap with the CSI-RS resources for the existing UEs. Among the CSI-RS resources for new UEs, CSI-RS resources other than the CDM group #0 may not overlap with the CSI-RS resources for the existing UEs.

The CSI-RS resource of the CDM group #0 may overlap with other CSI-RS resources by orthogonalizing with other CSI-RS resources by using the scrambling ID. A difference (power difference) in energy per resource element (EPRE) among the plurality of CSI-RS resources overlapping each other may be equal to or less than a threshold value (EPRE may be equal among the plurality of CSI-RS resources).

<<Time/Frequency Resource 2>>

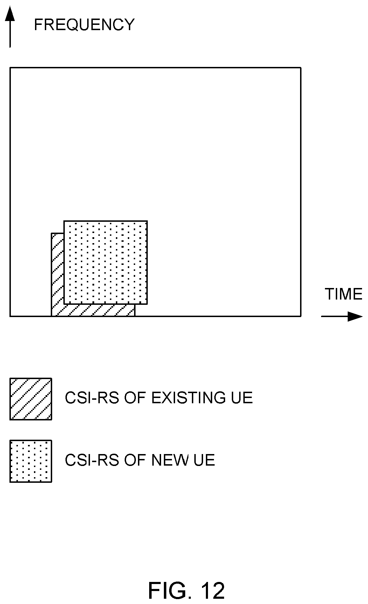

The CSI-RS resource for the new (for example, Rel. 16 or later) UE may overlap with the CSI-RS resource for the existing (for example, Rel. 15) UE in time and frequency (Fig. 12). The resource utilization efficiency can be increased as compared with a case where the CSI-RS resources do not overlap in at least one of time and frequency.

The OCC may be applied to the reference signal sequence of the CSI-RS according to any one of the following OCC application methods 1 to 3.

[OCC Application Method 1]

At least one of the FD-OCC and the TD-OCC may be configured for each CDM group. Thereby, the TD-OCC/FD-OCC can be flexibly configured independently for each CDM group.

In Rel. 15, the same plurality of OCCs are applied to the plurality of CDM groups. For a plurality of ports in each CDM group, the plurality of OCCs is applied in order of an OCC index (sequence index).

A plurality of OCC indexes are associated with the TD-OCC/FD-OCC, and the UE may configure, for each CDM group, a start OCC index by higher layer signaling. The start OCC index may be an OCC index allocated to the first port in one CDM group. When the start OCC index is not configured/provided in notification, the UE allocates the OCC index to the port starting from the OCC index 0.

The UE allocates an OCC index s ($0 \leq i < L$) sequentially from a start OCC index i ($0 \leq i < L$) to each port p (p = 0, 1,..., L-1) in one CDM group with a CDM group size L. The OCC index s may be determined by s = p + i mod L.

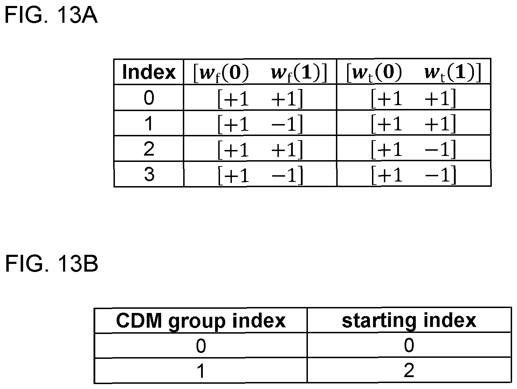

The association between the OCC index and the combination of a FD-OCC value and a TD-OCC value may be specified in the specification or may be configured by RRC signaling. In the example of Fig. 13A, a combination of the value of the length-2 FD-OCC and the value of the length-2 TD-OCC used for the CDM group of 4 REs is associated with the OCC index. For one CDM group, the UE may allocate the OCC index to the port starting from the start OCC index, and determine the FD-OCC and the TD-OCC associated with the OCC index.

The association between the OCC value available for the FD-OCC and the TD-OCC and the OCC index may be specified in the specification or may be configured by the RRC signaling. In the example of Fig. 13B, the value of the length-2 OCC available for the FD-OCC and the TD-OCC in the CDM group of 4 REs is associated with the OCC index. For one CDM group, the UE may allocate the OCC index to the port starting from the start OCC index, and determine the FD-OCC and the TD-OCC associated with the OCC index.

For each CDM group, a list of OCC indexes may be specified by a specification or configured by RRC signaling, and for each CDM group, an instruction on at least one OCC index in the list may be given by a MAC CE or DCI. As a result, the OCC can be changed according to the situation.

The UE may be configured with at least one of a start OCC index and a reference signal sequence for each CDM group. The reference signal sequence may be configured by the scrambling ID.

[OCC Application Method 2]

For at least one of the FD-OCC and the TD-OCC, the OCC index may be configured for each port/CDM group.

The UE may be notified by higher layer signaling of the bitmap indicating the OCC index applied to each of the plurality of ports/plurality of CDM groups. The position of each bit in the bitmap may correspond to a combination of a port/CDM group and an OCC index. When a bit is 1, the OCC index corresponding to the position of the bit may be applied to the port/CDM group corresponding to the position of the bit.

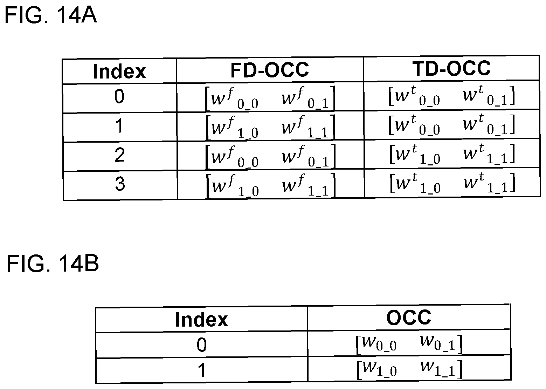

The association between the OCC index and the combination of a FD-OCC value and a TD-OCC value may be specified in the specification or may be configured by RRC signaling. In the example of Fig. 14A, a combination of the value of the length-2 FD-OCC and the value of the length-2 TD-OCC used for the CDM group of 4 REs is associated with the OCC index. The UE may be configured/informed of the OCC index corresponding to each port of each CDM group, and determine the FD-OCC and TD-OCC associated with the OCC index.

The association between the OCC value available for the FD-OCC and the TD-OCC and the OCC index may be specified in the specification or may be configured by the RRC signaling. In the example of Fig. 14B, the value of the length-2 OCC available for the FD-OCC and the TD-OCC in the CDM group of 4 REs is associated with the OCC index. The UE may be configured/informed of the OCC index corresponding to each port of each CDM group, and determine the FD-OCC and TD-OCC associated with the OCC index.

The UE may be configured/notified of the association between the value of the FD-OCC and the value of the TD-OCC and the OCC index for each CDM group, or may be configured/notified of the association between the value of the OCC available for the FD-OCC and the FD-OCC and the OCC index for each CDM group.

The UE may not configure the FD-OCC and the TD-OCC for the CDM group #0. When the reference signal sequence of the CDM group #0 is based on the existing scrambling ID, the UE may not configure the FD-OCC and the TD-OCC for the CDM group #0.

For each port/CDM group, a list of OCC indexes is defined by specification or configured by the RRC signaling, and for each port/CDM group, an instruction on at least one OCC index in the list may be given by MAC CE or DCI. As a result, the OCC can be changed according to the situation.

In at least one of the OCC application methods 1 and 2, the FD-OCC/TD-OCC may be determined by a cyclic shift.

The cyclic shift may be represented by a cyclic shift index. When the length of the FD-OCC/TD-OCC is M, the cyclic shift index m may be any of 0, 1,..., M-1. The cyclic shift corresponding to the cyclic shift index m may be represented by a phase rotation amount $\alpha_m = 2\pi m/M$ [rad] or 360 m/M [degree].

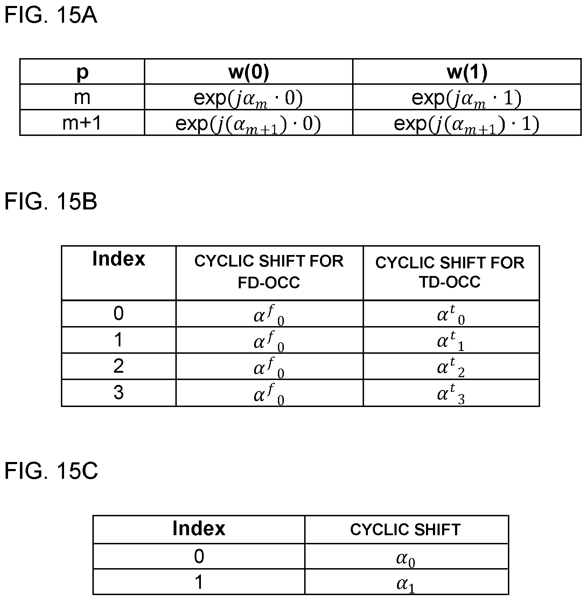

In the example of Fig. 15A, the value of the OCC of length-2 [w(0), w(1)] may be represented using a cyclic shift index m (for example, m = 0).

The association between the combination of the value of the cyclic shift of the FD-OCC and the value of the cyclic shift of the TD-OCC and the OCC index may be specified in the specification or may be configured by the RRC signaling. In the example of Fig. 15B, a combination of a value of a cyclic shift corresponding to the length-2 FD-OCC and a value of a cyclic shift corresponding to the lenght-2 TD-OCC used for a CDM group of 4 REs is associated with the OCC index.

The association between the value of the cyclic shift of the OCC available for the FD-OCC and the TD-OCC and the OCC index may be specified in the specification or may be configured by the RRC signaling. In the example of Fig. 15C, a value of a cyclic shift corresponding to the length-2 OCC available for the FD-OCC and TD-OCC in the CDM group of 4 REs is associated with the OCC index.

For each port/CDM group, a list of cyclic shift indexes is defined by specification or configured by the RRC signaling, and for each port/CDM group, an instruction on at least one cyclic shift index in the list may be given by MAC CE or DCI. As a result, the OCC can be changed according to the situation.

The UE may be configured with at least one of the OCC index and the reference signal sequence for each port/CDM group. The reference signal sequence may be configured by the scrambling ID.

The UE may determine the reference signal sequence of the CSI-RS according to at least one of the following reference signal sequence determination methods 1 and 2:

[Reference Signal Sequence Determination Method 1]

A reference signal sequence corresponding to at least one of the specific CDM group and the specific port of the CSI-RS may be a specific sequence. For example, the specific sequence may be all 1. This ensures orthogonality by multiplying the reference signal sequence by the OCC.

[Reference Signal Sequence Determination Method 2]

The reference signal sequence corresponding to at least one of the specific CDM group and the specific port of the CSI-RS may be a sequence obtained by applying the conversion formula to the PN sequence in Rel. 15. The conversion formula may be performing multiplication/addition/division/subtraction of an additional sequence/code on the reference signal sequence.

According to the sixth embodiment described above, the OCCs for a plurality of CSI-RSs can be appropriately configured.

<Seventh Embodiment>

In one CDM group of one cell, even when CSI-RSs of the plurality of ports use a same PN sequence or a PN sequence with high correlation, the UE can separate the CSI-RSs of the plurality of ports by the OCC.

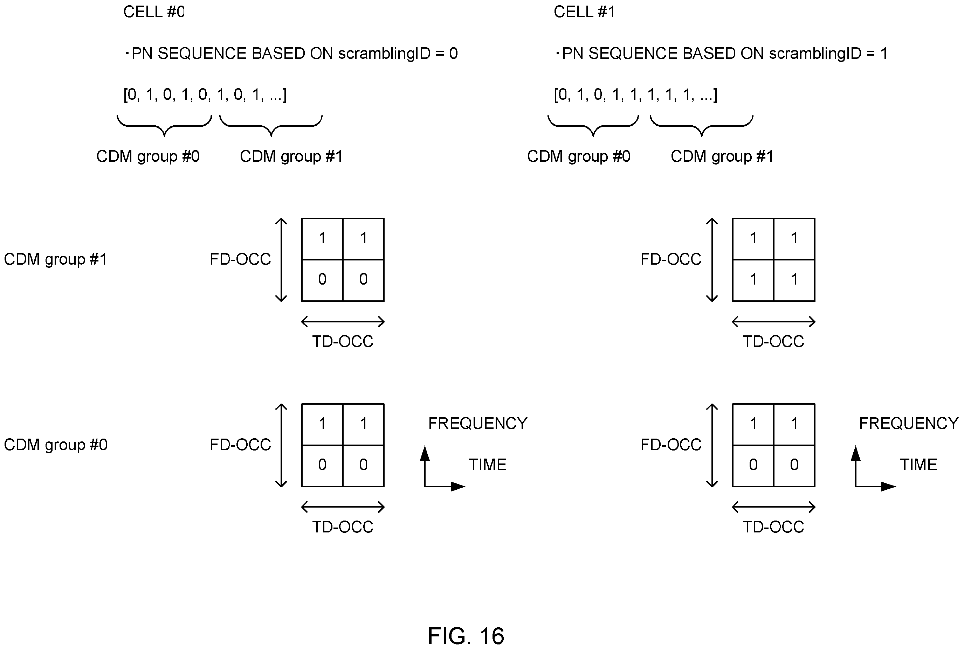

In a same CDM group, when CSI-RSs of the plurality of cells use a same reference signal sequence (PN sequence), the UE cannot separate the CSI-RSs of the plurality of cells. In the example of Fig. 16, the PN sequence generated based on the scrambling ID = 0 for the cell #0 and the PN sequence generated based on the scrambling ID = 1 for the cell #1 are different from each other.

In the CDM group #0 of 4 REs (2 symbols × 2 subcarriers), the same reference signal sequence is allocated to the cell #0 and the cell #1, and in the CDM group #1, different reference signal sequences are allocated to the cell #0 and the cell #1. The UE cannot separate the CSI-RSs of the cell #0 and the cell #1 in the CDM group #0. As described above, a case where the CSI-RSs of the cells #0 and #1 cannot be separated occurs with a probability of 1/8.

The UE may receive the CSI-RS to which the OCC is applied and multiply the CSI-RS by a specific code longer than the OCC.

In at least one of the frequency domain and the time domain, it may be prohibited to multiply only one OCC corresponding to one CDM group.

The length of the specific code (OCC decoding range) may be represented by at least one of the number of REs, the number of subcarriers, the number of PRBs, the number of symbols, and the number of CDM groups. The length of the specific code may be specified in a specification, may be configured by the RRC signaling, may be reported by UE capability information, or may be configured by the RRC signaling based on a value range reported by the UE capability information.

The specific code may be a frequency domain code obtained by concatenation of N FD-OCCs. The N FD-OCCs may be respectively corresponding to N CDM groups (OCC decoding range). The specific code may be a time domain code obtained by concatenation of N TD-OCCs. The N TD-OCCs may be respectively corresponding to the N CDM groups (OCC decoding range). N may be 2 or more.

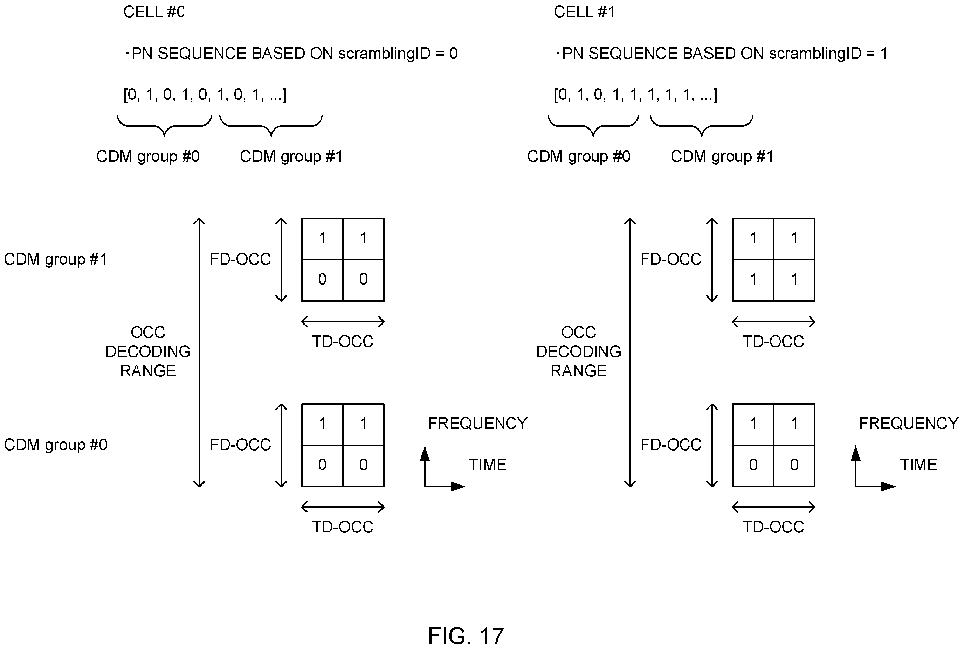

In the example of Fig. 17, in the cells #0 and #1, the reference signal sequence allocated to the CDM groups #0 and #1 is the same as that in Fig. 16.

The UE obtains a specific code by concatenating the FD-OCC of the CDM group #0 and the FD-OCC of the CDM group #1. The UE may separate the CSI-RSs of the cells #0 and #1 by multiplying the received signals across the CDM groups #0 and #1 (OCC decoding range) in the frequency domain by the specific code.

When the reference signal sequences across the CDM groups #0 and #1 are the same between the cells #0 and #1, the UE cannot separate the CSI-RSs of the cells #0 and #1. In this manner, a case where the CSI-RSs of the cells #0 and #1 are inseparable can be reduced to 1/16 probability.

As a result, even when the reference signal sequence for each CDM group is not configured/given in instruction, interference of CSI-RS between cells can be reduced.

As the length of the specific code is increased, the probability that the reference signal sequences match between the cells can be reduced, and the inter-cell interference can be suppressed. Meanwhile, by multiplying the received signal by the FD-OCC beyond the coherent band or by the TD-OCC over the time the channel fluctuates, the orthogonality of the OCCs within the cell may be broken.

When the application condition is met, the UE may apply the specific code to the reception of the plurality of CDM groups. The application condition may require at least one of the following conditions 1 to 3.

[Condition 1]

The UE is configured/instructed by RRC signaling/MAC CE/DCI to apply a specific code from the network.

[Condition 2]

A parameter related to frequency selectivity (for example, a parameter related to CSI and a new parameter) is equal to or less than a threshold value or equal to or more than a threshold value.

[Condition 3]

UE is at a cell end. Specifically, the condition may be that the received power/received quality (for example, a reported value of L1/L3-RSRP/SINR and a value of CQI/CSI) of the own cell is equal to or less than the threshold value, the received power/received quality (for example, a reported value of L1/L3-RSRP/SINR and a value of CQI/CSI.) of the peripheral cell is equal to or less than the threshold value, the UL transmission power is equal to or more than the threshold value, or the power headroom (PHR) is equal to or less than the threshold value.

According to the seventh embodiment described above, interference of CSI-RS between cells can be reduced.

(Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

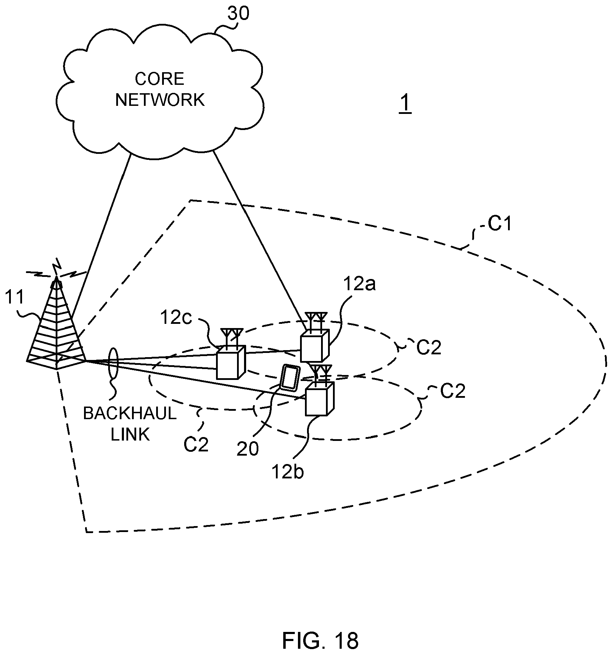

Fig. 18 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)) .

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, the higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for the DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRSs may be referred to as "user terminal- specific reference signals (UE-specific reference signals)".

(Base Station)

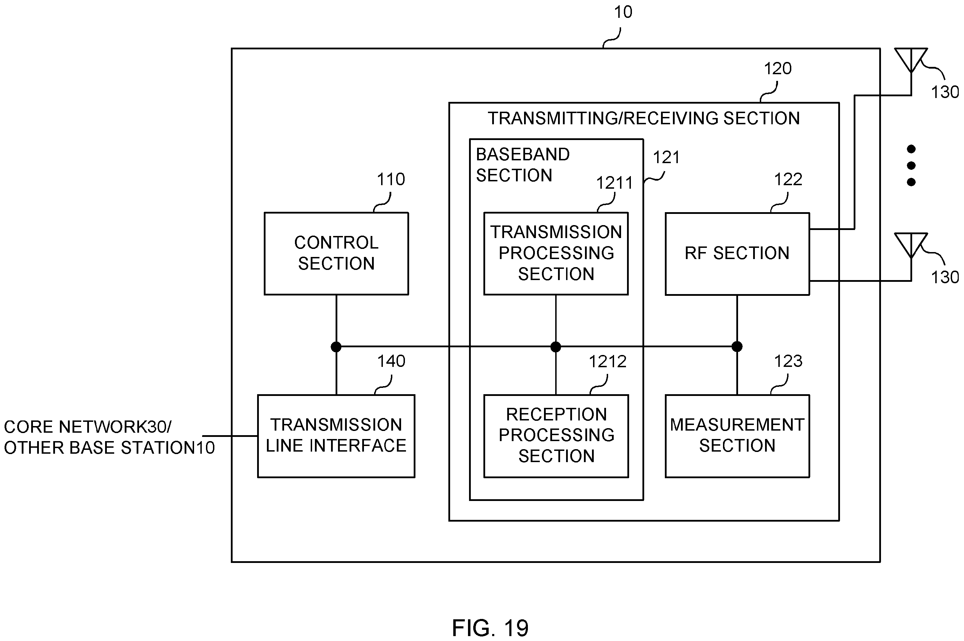

Fig. 19 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may include the transmission processing section 1211 and the RF section 122. The receiving section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that, the transmitting section and the receiving section of the base station 10 in the present disclosure may include at least one of the transmitting/receiving section 120, the transmission/reception antenna 130, and the transmission line interface 140.

The transmitting/receiving section 120 may transmit configuration information for generating different channel state information (CSI)-reference signal (RS) sequences among a plurality of resources. Each of the plurality of resources may be any of a CSI-RS port, a code division multiplexing (CDM) group, and a cell. The control section 110 may generate a plurality of CSI-RS sequences based on the configuration information.

The control section 110 may determine at least one of a reference signal sequence for a channel state information (CSI)-reference signal (RS), an orthogonal cover code (OCC) for the CSI-RS, a specific code for decoding the OCC, and a resource that does not overlap with a specific CSI-RS resource for a port in at least one code division multiplexing (CDM) group for the CSI-RS. The transmitting/receiving section 120 may transmit the information regarding the CSI-RS on the basis of the determination.

(User Terminal)

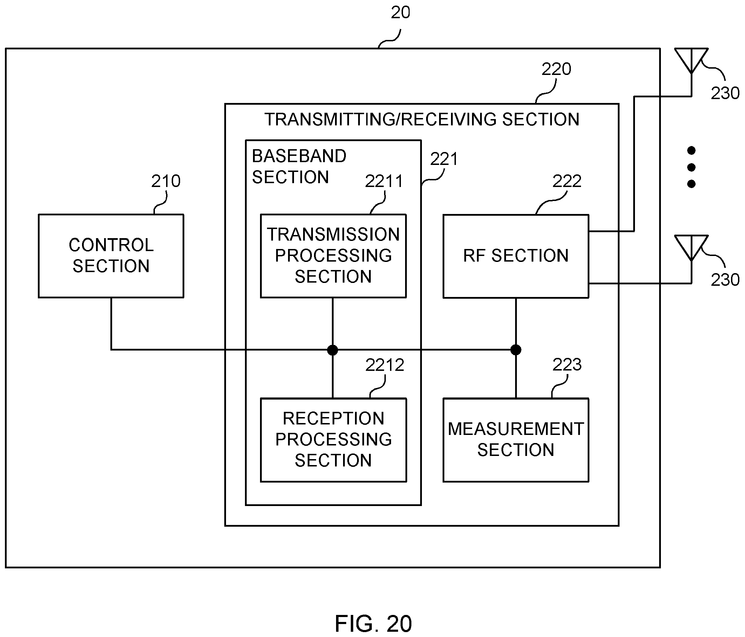

Fig. 20 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may be configured by the reception processing section 2212, the RF section 222, and the measurement section 223.

The transmission/reception antenna 230 can include an antenna that is described on the basis of common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 receives configuration information for using different channel state information (CSI)-reference signal (RS) sequences across a plurality of resources, wherein each of the plurality of resources may be any one of a CSI-RS port, a code division multiplexing (CDM) group, and a cell. The control section 210 may perform measurement using a plurality of CSI-RS sequences based on the configuration information.

The configuration information may include different scrambling IDs for the plurality of resources. The plurality of CSI-RS sequences may be based on the different scrambling IDs.

The configuration information may include a specific parameter for the CSI-RS resource. The control section 210 may determine different scrambling IDs for the plurality of resources on the basis of the specific parameter. The plurality of CSI-RS sequences may be based on the different scrambling IDs.

The configuration information may include a plurality of scrambling IDs. The control section 210 may determine one scrambling ID from the plurality of scrambling IDs on the basis of the downlink control information. The plurality of CSI-RS sequences may be based on the one scrambling ID.

The transmitting/receiving section 220 may receive information relating to channel state information (CSI)-reference signal (RS). The control section 210 may determine, for a port of at least one code division multiplexing (CDM) group on the basis of the information, at least one of a reference signal sequence for the CSI-RS, an orthogonal cover code (OCC) for the CSI-RS, a specific code for decoding the OCC, and a resource that does not overlap with a specific CSI-RS resource.

The time and frequency resources of the CDM group may not overlap with the CSI-RS resources of Release 15.

The time and frequency resource of the CDM group may overlap with the CSI-RS resource of Release 15. The information may indicate an OCC of at least one of the CDM group and the CSI-RS port.

The specific code may be longer than a length of an OCC applied to the CDM group. The control section 210 may multiply a received signal across the plurality of CDM groups by the specific code.

(Hardware Configuration)

Note that the block diagrams that have been used to describe the above embodiments illustrate blocks in functional units. These functional blocks (components) may be implemented in arbitrary combinations of at least one of hardware and software. Further, a method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using the plurality of apparatuses. The functional block may be implemented by combining the one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

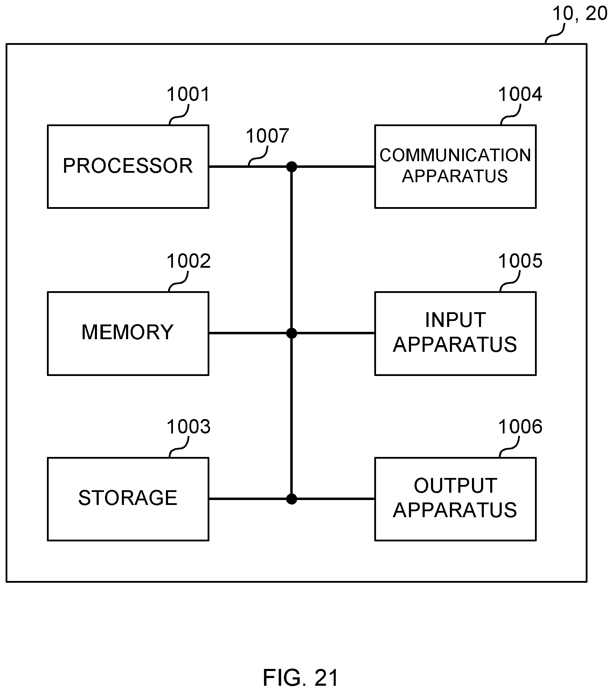

For example, the base station, the user terminal, or the like according to one embodiment of the present disclosure may function as a computer that executes the processing of the radio communication method of the present disclosure. Fig. 21 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading given software (program) onto hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and the like from at least either the storage 1003 or the communication apparatus 1004 into the memory 1002, and executes various processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk, a removable disk, a hard disk drive, a smart card, a flash memory device (for example, a card, a stick, or a key drive), a magnetic stripe, a database, a server, or other appropriate storage media. The storage 1003 may be referred to as a "secondary storage apparatus".

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, the apparatuses including the processor 1001, the memory 1002, or the like are connected by the bus 1007 so as to communicate information. The bus 1007 may be formed with a single bus, or may be formed with buses that vary between the apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

(Modifications)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in a time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, or the like.

The slot may include one or more symbols in the time domain (orthogonal frequency division multiplexing (OFDM) symbols, single carrier frequency division multiple access (SC-FDMA) symbols, and the like). Also, the slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as a "PDSCH (PUSCH) mapping type A". A PDSCH (or PUSCH) transmitted using the mini slot may be referred to as a "PDSCH (PUSCH) mapping type B".

A radio frame, a subframe, a slot, a mini slot, and a symbol all represent the time unit in signal transmission. The radio frame, the subframe, the slot, the mini slot, and the symbol may be called by other applicable names, respectively. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", or the like, instead of a "subframe".

Here, the TTI refers to a minimum time unit of scheduling in radio communication, for example. For example, in the LTE system, the base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit such as a channel-coded data packet (transport block), a code block, a codeword, or the like, or may be a processing unit such as scheduling or link adaptation. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may be referred to as a normal TTI (TTI in 3GPP Rel. 8 to 12), a normal TTI, a long TTI, a usual subframe, a normal subframe, a long subframe, a slot, or the like. A TTI that is shorter than the normal TTI may be referred to as a shortened TTI, a short TTI, a partial TTI (or fractional TTI), a shortened subframe, a short subframe, a mini slot, a subslot, a slot, or the like.

Note that the long TTI (for example, a normal TTI, a subframe, or the like) may be replaced with a TTI having a time duration exceeding 1 ms, and the short TTI (for example, a shortened TTI) may be replaced with a TTI having a TTI duration less than the TTI duration of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe or one TTI in length. One TTI, one subframe, and the like may each include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB with reference to a common reference point of the carrier. A PRB may be defined in a certain BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that, a "cell", a "carrier", and the like in the present disclosure may be replaced with a BWP.

Note that the structures of radio frames, subframes, slots, mini slots, symbols, or the like described above are merely examples. For example, configurations such as the number of subframes included in a radio frame, the number of slots per subframe or radio frame, the number of mini slots included in a slot, the number of symbols and the RBs included in a slot or a mini slot, the number of subcarriers included in the RB, the number of symbols in the TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, an instruction on a radio resource may be given by a given index.

Names used for, for example, parameters in the present disclosure are in no respect limitative. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and the like may be input and output via a plurality of network nodes.

The information, signals and the like that are input and/or output may be stored in a specific location (for example, in a memory), or may be managed in a control table. The input and output information, signals, and the like can be overwritten, updated, or appended. The output information, signals, and the like may be deleted. The input information, signals and the like may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of given information (for example, reporting of information to the effect that "X holds") does not necessarily have to be sent explicitly, and can be sent implicitly (for example, by not reporting this piece of information, by reporting another piece of information, and the like).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of the transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, terms such as a "mobile station (MS)", a "user terminal", a "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and mobile station may be called as a transmission apparatus, a reception apparatus, a wireless communication apparatus, and the like. Note that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station and the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Likewise, the user terminal in the present disclosure may be replaced with the base station. In this case, the base station 10 may be configured to have the functions of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, although various methods have been illustrated in the present disclosure with various components of steps using exemplary orders, the specific orders that are illustrated herein are by no means limiting.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and the like as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may encompass a wide variety of operations. For example, the "determining" may be regarded as judging, calculating, computing, processing, deriving, investigating, looking up, search, inquiry (for example, looking up in a table, database, or another data structure), ascertaining, and the like.

Furthermore, the "determining" used herein may be interpreted to mean making "determination" related to receiving (for example, receiving information), transmitting (for example, transmitting information), inputting, outputting, accessing (for example, accessing data in a memory), and the like.

In addition, the "determining" used herein may be interpreted to mean making "determination" related to resolving, selecting, choosing, establishing, comparing, and the like. In other words, the "determining" used herein may be interpreted to mean making "determination" related to some action.

In addition, "determining" used herein may be read as "assuming", "expecting", "considering", or the like.

The "maximum transmission power" described in the present disclosure may mean a maximum value of transmission power, nominal UE maximum transmit power, or rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency domain, microwave, and optical (both visible and invisible) regions, or the like.

In the present disclosure, the phrase "A and B are different" may mean "A and B are different from each other". Note that the phrase may mean that "A and B are different from C". The terms such as "separated", "coupled", and the like may be similarly interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1.   A terminal comprising:

   a receiving section configured to receive information relating to channel state information (CSI)-reference signal (RS); and
   a control section configured to determine, for a port of at least one code division multiplexing (CDM) group, at least one of a reference signal sequence for the CSI-RS, an orthogonal cover code (OCC) for the CSI-RS, a specific code for decoding the OCC, and a resource that does not overlap with a specific CSI-RS resource based on the information.

2.   The terminal according to claim 1, wherein time and frequency resources of the CDM group do not overlap with CSI-RS resources in Release 15.

3.   The terminal according to claim 1, wherein

   time and frequency resources of the CDM group overlap with CSI-RS resources of Release 15, and
   the information indicates an OCC of at least one of the CDM group and a CSI-RS port.

4.   The terminal according to claim 1, wherein

   the specific code is longer than a length of an OCC applied to the CDM group, and
   the control section multiplies a received signal across a plurality of CDM groups by the specific code.

5.   A radio communication method of a terminal, comprising:

   receiving information relating to channel state information (CSI)-reference signal (RS); and
   determining, for a port of at least one code division multiplexing (CDM) group, at least one of a resource of the CSI-RS that does not overlap with a specific CSI-RS resource, a reference signal sequence for the CSI-RS, an orthogonal cover code (OCC) for the CSI-RS, and a specific code for decoding the OCC based on the information.

6.   A base station comprising:

   a control section configured to determine, for a port of at least one code division multiplexing (CDM) group for channel state information (CSI)-reference signal (RS), at least one of a reference signal sequence for the CSI-RS, an orthogonal cover code (OCC) for the CSI-RS, a specific code for decoding the OCC, and a resource that does not overlap with a specific CSI-RS resource; and

a transmitting section configured to transmit information related to the CSI-RS based on the determination.

FIG. 1

| Row | Ports $X$ | Density $\rho$ | cdm-Type | $(\bar{k},\bar{l})$ | CDM group index $j$ | $k'$ | $l'$ |
|---|---|---|---|---|---|---|---|
| 1 | 1 | 3 | No CDM | $(k_0,l_0)$, $(k_0+4,l_0)$, $(k_0+8,l_0)$ | 0,0,0 | 0 | 0 |
| 2 | 1 | 1, 0.5 | No CDM | $(k_0,l_0)$, | 0 | 0 | 0 |
| 3 | 2 | 1, 0.5 | FD-CDM2 | $(k_0,l_0)$, | 0 | 0, 1 | 0 |
| 4 | 4 | 1 | FD-CDM2 | $(k_0,l_0)$, $(k_0+2,l_0)$ | 0,1 | 0, 1 | 0 |
| 5 | 4 | 1 | FD-CDM2 | $(k_0,l_0)$, $(k_0,l_0+1)$ | 0,1 | 0, 1 | 0 |
| 6 | 8 | 1 | FD-CDM2 | $(k_0,l_0)$, $(k_1,l_0)$, $(k_2,l_0)$, $(k_3,l_0)$ | 0,1,2,3 | 0, 1 | 0 |
| 7 | 8 | 1 | FD-CDM2 | $(k_0,l_0)$, $(k_1,l_0)$, $(k_0,l_0+1)$, $(k_1,l_0+1)$ | 0,1,2,3 | 0, 1 | 0 |
| 8 | 8 | 1 | CDM4 (FD2,TD2) | $(k_0,l_0)$, $(k_1,l_0)$ | 0,1 | 0, 1 | 0, 1 |
| 9 | 12 | 1 | FD-CDM2 | $(k_0,l_0)$, $(k_1,l_0)$, $(k_2,l_0)$, $(k_3,l_0)$, $(k_4,l_0)$, $(k_5,l_0)$ | 0,1,2,3,4,5 | 0, 1 | 0 |
| 10 | 12 | 1 | CDM4 (FD2,TD2) | $(k_0,l_0)$, $(k_1,l_0)$, $(k_2,l_0)$ | 0,1,2 | 0, 1 | 0, 1 |
| 11 | 16 | 1, 0.5 | FD-CDM2 | $(k_0,l_0)$, $(k_1,l_0)$, $(k_2,l_0)$, $(k_3,l_0)$, $(k_0,l_0+1)$, $(k_1,l_0+1)$, $(k_2,l_0+1)$, $(k_3,l_0+1)$ | 0,1,2,3, 4,5,6,7 | 0, 1 | 0 |
| 12 | 16 | 1, 0.5 | CDM4 (FD2,TD2) | $(k_0,l_0)$, $(k_1,l_0)$, $(k_2,l_0)$, $(k_3,l_0)$ | 0,1,2,3 | 0, 1 | 0, 1 |
| 13 | 24 | 1, 0.5 | FD-CDM2 | $(k_0,l_0)$, $(k_1,l_0)$, $(k_2,l_0)$, $(k_0,l_0+1)$, $(k_1,l_0+1)$, $(k_2,l_0+1)$, $(k_0,l_1)$, $(k_1,l_1)$, $(k_2,l_1)$, $(k_0,l_1+1)$, $(k_1,l_1+1)$, $(k_2,l_1+1)$ | 0,1,2,3,4,5, 6,7,8,9,10,11 | 0, 1 | 0 |
| 14 | 24 | 1, 0.5 | CDM4 (FD2,TD2) | $(k_0,l_0)$, $(k_1,l_0)$, $(k_2,l_0)$, $(k_0,l_1)$, $(k_1,l_1)$, $(k_2,l_1)$ | 0,1,2,3,4,5 | 0, 1 | 0, 1 |
| 15 | 24 | 1, 0.5 | CDM8 (FD2,TD4) | $(k_0,l_0)$, $(k_1,l_0)$, $(k_2,l_0)$ | 0,1,2 | 0, 1 | 0, 1, 2, 3 |
| 16 | 32 | 1, 0.5 | FD-CDM2 | $(k_0,l_0)$, $(k_1,l_0)$, $(k_2,l_0)$, $(k_3,l_0)$, $(k_0,l_0+1)$, $(k_1,l_0+1)$, $(k_2,l_0+1)$, $(k_3,l_0+1)$, $(k_0,l_1)$, $(k_1,l_1)$, $(k_2,l_1)$, $(k_3,l_1)$, $(k_0,l_1+1)$, $(k_1,l_1+1)$, $(k_2,l_1+1)$, $(k_3,l_1+1)$ | 0,1,2,3, 4,5,6,7, 8,9,10,11, 12,13,14,15 | 0, 1 | 0 |
| 17 | 32 | 1, 0.5 | CDM4 (FD2,TD2) | $(k_0,l_0)$, $(k_1,l_0)$, $(k_2,l_0)$, $(k_3,l_0)$, $(k_0,l_1)$, $(k_1,l_1)$, $(k_2,l_1)$, $(k_3,l_1)$ | 0,1,2,3,4,5,6,7 | 0, 1 | 0, 1 |
| 18 | 32 | 1, 0.5 | CDM8 (FD2,TD4) | $(k_0,l_0)$, $(k_1,l_0)$, $(k_2,l_0)$, $(k_3,l_0)$ | 0,1,2,3 | 0, 1 | 0, 1, 2, 3 |

## FIG. 2A

| Index | $w_f(0)$ | $w_t(0)$ |
|-------|----------|----------|
| 0 | 1 | 1 |

## FIG. 2B

| Index | $[w_f(0) \quad w_f(1)]$ | $w_t(0)$ |
|-------|-------------------------|----------|
| 0 | $[+1 \quad +1]$ | 1 |
| 1 | $[+1 \quad -1]$ | 1 |

## FIG. 2C

| Index | $[w_f(0) \quad w_f(1)]$ | $[w_t(0) \quad w_t(1)]$ |
|-------|-------------------------|-------------------------|
| 0 | $[+1 \quad +1]$ | $[+1 \quad +1]$ |
| 1 | $[+1 \quad -1]$ | $[+1 \quad +1]$ |
| 2 | $[+1 \quad +1]$ | $[+1 \quad -1]$ |
| 3 | $[+1 \quad -1]$ | $[+1 \quad -1]$ |

## FIG. 2D

| Index | $[w_f(0) \quad w_f(1)]$ | $[w_t(0) \quad w_t(1) \quad w_t(2) \quad w_t(3)]$ |
|-------|-------------------------|---------------------------------------------------|
| 0 | $[+1 \quad +1]$ | $[+1 \quad +1 \quad +1 \quad +1]$ |
| 1 | $[+1 \quad -1]$ | $[+1 \quad +1 \quad +1 \quad +1]$ |
| 2 | $[+1 \quad +1]$ | $[+1 \quad -1 \quad +1 \quad -1]$ |
| 3 | $[+1 \quad -1]$ | $[+1 \quad -1 \quad +1 \quad -1]$ |
| 4 | $[+1 \quad +1]$ | $[+1 \quad +1 \quad -1 \quad -1]$ |
| 5 | $[+1 \quad -1]$ | $[+1 \quad +1 \quad -1 \quad -1]$ |
| 6 | $[+1 \quad +1]$ | $[+1 \quad -1 \quad -1 \quad +1]$ |
| 7 | $[+1 \quad -1]$ | $[+1 \quad -1 \quad -1 \quad +1]$ |

| # of ports | Freq. density (RE/RB/port) | Component resource (F, T) | CDM |
|---|---|---|---|
| 1 | 1/2, 1, 3 | N/A | N/A |
| 2 | 1/2, 1 | (2, 1) | FD2 |
| 4 | 1 | (4, 1) or (2, 2) | FD2 |
| 8 | 1 | (2, 1) or (2, 2) | FD2 |
| 8 | 1 | (2, 2) | FD2TD2 |
| 12 | 1 | (2, 1) | FD2 |
| 12 | 1 | (2, 2) | FD2TD2 |
| 16 | 1/2, 1 | (2, 2) | FD2, FD2TD2 |
| 24 | 1/2, 1 | (2, 2) or (2, 4) | FD2, FD2TD2 |
| 24 | 1/2, 1 | (2, 4) | FD2TD4 |
| 32 | 1/2, 1 | (2, 2) or (2, 4) | FD2, FD2TD2 |
| 32 | 1/2, 1 | (2, 4) | FD2TD4 |

FIG. 3

SUBCARRIER k

OFDM SYMBOL l

COMPONENT RESOURCE

FIG. 4

EP 4 120 643 A1

SUBCARRIERk

OFDM SYMBOL l

CDM GROUP #0

CDM GROUP #1

CDM GROUP #2

FIG. 5

EP 4 120 643 A1

| Row | Ports $X$ | Density $\rho$ | cdm-Type | $(\bar{k},\bar{l})$ | CDM group index $j$ | $k'$ | $l'$ | scrambling ID offset |
|---|---|---|---|---|---|---|---|---|
| 1 | 1 | 3 | No CDM | $(k_0, l_0)$, $(k_0+4, l_0)$, $(k_0+8, l_0)$ | 0,0,0 | 0 | 0 | $y_0, y_1, y_2$ |
| 2 | 1 | 1, 0.5 | No CDM | $(k_0, l_0)$, | 0 | 0 | 0 | $y_0$ |
| 3 | 2 | 1, 0.5 | FD-CDM2 | $(k_0, l_0)$, | 0 | 0, 1 | 0 | $y_0$, |
| 4 | 4 | 1 | FD-CDM2 | $(k_0, l_0)$, $(k_0+2, l_0)$ | 0,1 | 0, 1 | 0 | $y_0, y_1$ |
| ... | ... | ... | ... | ... | ... | ... | ... | ... |

FIG. 6

EP 4 120 643 A1

## FIG. 7A

PN SEQUENCE    [r0, r1, r2, r3, r4, r5, r6, r7, r8, r9, r10, r11, ...]

CDM group #0        CDM group #1        CDM group #2

## FIG. 7B

PN SEQUENCE    [r0, r1, r2, r3, r4, r5, r6, r7, r8, r9, r10, r11, ...]

CELL #1    CDM group #0        CDM group #1        CDM group #2

CELL #2    CDM group #0        CDM group #2        CDM group #1

EXISTING UE

·PN SEQUENCE BASED ON scramblingID

[r0, r1, r2, r3, r4, r5, r6, r7, r8, r9, r10, r11, ...]

CDM group #0    CDM group #1    CDM group #2

NEW UE

·PN SEQUENCE BASED ON scramblingID0

[r0_0, r0_1, r0_2, r0_3, r0_4, r0_5, r0_6, r0_7, ...]

CDM group #0

·PN SEQUENCE BASED ON scramblingID1

[r1_0, r1_1, r1_2, r1_3, r1_4, r1_5, r1_6, r1_7, ...]

CDM group #1

| | |
|---|---|
| r5 | r7 |
| r4 | r6 |

CDM group #1

| | |
|---|---|
| r1_5 | r1_7 |
| r1_4 | r1_6 |

CDM group #1

| | |
|---|---|
| r1 | r3 |
| r0 | r2 |

CDM group #0

FREQUENCY

TIME

| | |
|---|---|
| r0_1 | r0_3 |
| r0_0 | r0_2 |

CDM group #0

FREQUENCY

TIME

FIG. 8

EP 4 120 643 A1

EXISTING UE

·PN SEQUENCE BASED ON scramblingID

[r0, r1, r2, r3, r4, r5, r6, r7, r8, r9, r10, r11, ...]

CDM group #0   CDM group #1   CDM group #2

NEW UE

·PN SEQUENCE BASED ON scramblingID

[r0, r1, r2, r3, r4, r5, r6, r7, ...]

CDM group #0

·PN SEQUENCE BASED ON scramblingID1

[r1_0, r1_1, r1_2, r1_3, r1_4, r1_5, r1_6, r1_7, ...]

CDM group #1

| r5 | r7 |
| r4 | r6 |

CDM group #1

| r1_5 | r1_7 |
| r1_4 | r1_6 |

CDM group #1

| r1 | r3 |
| r0 | r2 |

CDM group #0

FREQUENCY

TIME

| r1 | r3 |
| r0 | r2 |

CDM group #0

FREQUENCY

TIME

FIG. 9

FIG. 10

FIG. 11

EP 4 120 643 A1

FREQUENCY

TIME

CSI-RS OF EXISTING UE

CSI-RS OF NEW UE

FIG. 12

FIG. 13A

| Index | $[w_{\mathrm{f}}(0) \quad w_{\mathrm{f}}(1)]$ | $[w_{\mathrm{t}}(0) \quad w_{\mathrm{t}}(1)]$ |
|---|---|---|
| 0 | $[+1 \quad +1]$ | $[+1 \quad +1]$ |
| 1 | $[+1 \quad -1]$ | $[+1 \quad +1]$ |
| 2 | $[+1 \quad +1]$ | $[+1 \quad -1]$ |
| 3 | $[+1 \quad -1]$ | $[+1 \quad -1]$ |

FIG. 13B

| CDM group index | starting index |
|---|---|
| 0 | 0 |
| 1 | 2 |

FIG. 14A

| Index | FD-OCC | TD-OCC |
|---|---|---|
| 0 | $\left[w^f_{0\_0} \quad w^f_{0\_1}\right]$ | $\left[w^t_{0\_0} \quad w^t_{0\_1}\right]$ |
| 1 | $\left[w^f_{1\_0} \quad w^f_{1\_1}\right]$ | $\left[w^t_{0\_0} \quad w^t_{0\_1}\right]$ |
| 2 | $\left[w^f_{0\_0} \quad w^f_{0\_1}\right]$ | $\left[w^t_{1\_0} \quad w^t_{1\_1}\right]$ |
| 3 | $\left[w^f_{1\_0} \quad w^f_{1\_1}\right]$ | $\left[w^t_{1\_0} \quad w^t_{1\_1}\right]$ |

FIG. 14B

| Index | OCC |
|---|---|
| 0 | $\left[w_{0\_0} \quad w_{0\_1}\right]$ |
| 1 | $\left[w_{1\_0} \quad w_{1\_1}\right]$ |

FIG. 15A

| p | w(0) | w(1) |
|---|------|------|
| m | $\exp(j\alpha_m \cdot 0)$ | $\exp(j\alpha_m \cdot 1)$ |
| m+1 | $\exp(j(\alpha_{m+1}) \cdot 0)$ | $\exp(j(\alpha_{m+1}) \cdot 1)$ |

FIG. 15B

| Index | CYCLIC SHIFT FOR FD-OCC | CYCLIC SHIFT FOR TD-OCC |
|-------|-------------------------|-------------------------|
| 0 | $\alpha^f_0$ | $\alpha^t_0$ |
| 1 | $\alpha^f_0$ | $\alpha^t_1$ |
| 2 | $\alpha^f_0$ | $\alpha^t_2$ |
| 3 | $\alpha^f_0$ | $\alpha^t_3$ |

FIG. 15C

| Index | CYCLIC SHIFT |
|-------|--------------|
| 0 | $\alpha_0$ |
| 1 | $\alpha_1$ |

CELL #0

·PN SEQUENCE BASED ON scramblingID = 0

[0, 1, 0, 1, 0, 1, 0, 1, ...]

CDM group #0    CDM group #1

CDM group #1

FD-OCC

| 1 | 1 |
|---|---|
| 0 | 0 |

TD-OCC

CDM group #0

FD-OCC

| 1 | 1 |
|---|---|
| 0 | 0 |

TD-OCC

FREQUENCY

TIME

CELL #1

·PN SEQUENCE BASED ON scramblingID = 1

[0, 1, 0, 1, 1, 1, 1, 1, ...]

CDM group #0    CDM group #1

FD-OCC

| 1 | 1 |
|---|---|
| 1 | 1 |

TD-OCC

FD-OCC

| 1 | 1 |
|---|---|
| 0 | 0 |

TD-OCC

FREQUENCY

TIME

FIG. 16

EP 4 120 643 A1

CELL #0

·PN SEQUENCE BASED ON scramblingID = 0

[0, 1, 0, 1, 0, 1, 0, 1, ...]

CDM group #0    CDM group #1

CELL #1

·PN SEQUENCE BASED ON scramblingID = 1

[0, 1, 0, 1, 1, 1, 1, 1, ...]

CDM group #0    CDM group #1

CDM group #1

FD-OCC

| 1 | 1 |
| 0 | 0 |

TD-OCC

OCC DECODING RANGE

CDM group #0

FD-OCC

| 1 | 1 |
| 0 | 0 |

TD-OCC

FREQUENCY

TIME

FD-OCC

| 1 | 1 |
| 1 | 1 |

TD-OCC

OCC DECODING RANGE

FD-OCC

| 1 | 1 |
| 0 | 0 |

TD-OCC

FREQUENCY

TIME

FIG. 17

FIG. 18

FIG. 19

FIG. 20

10, 20

```
┌──────────────────────────────────────────────────────────────┐
│                                                                │
│        1001                              1004                  │
│   ┌─────────────┐                   ┌─────────────────┐        │
│   │             │      1007         │  COMMUNICATION  │        │
│   │  PROCESSOR  │────────●──────────│    APPARATUS    │        │
│   │             │        │          │                 │        │
│   └─────────────┘        │          └─────────────────┘        │
│                          │                                     │
│        1002              │               1005                  │
│   ┌─────────────┐        │          ┌─────────────────┐        │
│   │             │        │          │                 │        │
│   │   MEMORY    │────────●──────────│      INPUT      │        │
│   │             │        │          │    APPARATUS    │        │
│   └─────────────┘        │          └─────────────────┘        │
│                          │                                     │
│        1003              │               1006                  │
│   ┌─────────────┐        │          ┌─────────────────┐        │
│   │             │        │          │                 │        │
│   │   STORAGE   │────────●──────────│     OUTPUT      │        │
│   │             │                   │    APPARATUS    │        │
│   └─────────────┘                   └─────────────────┘        │
│                                                                │
└──────────────────────────────────────────────────────────────┘
```

FIG. 21

## INTERNATIONAL SEARCH REPORT

| International application No. |
|---|
| PCT/JP2020/010900 |

### A. CLASSIFICATION OF SUBJECT MATTER
Int. Cl. H04L27/26(2006.01)i
FI: H04L27/26 114

According to International Patent Classification (IPC) or to both national classification and IPC

### B. FIELDS SEARCHED

Minimum documentation searched (classification system followed by classification symbols)
Int. Cl. H04L27/26

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-531495 A (LG ELECTRONICS INC.) 06 October 2016, paragraphs [0084], [0085], [0088], [0160], fig. 8 | 1, 5-6 |
| A | | 2-4 |
| A | JP 2013-533670 A (CHINA MOBILE COMMUNICATIONS CORPORATION) 22 August 2013, paragraphs [0071]-[0073], fig. 9 | 1-6 |
| A | SAMSUNG, Remaining details on NR CSI-RS, 3GPP TSG RAN WG1 adhoc_NR_AH_1709 R1-1715966, 12 September 2017, sections 2.1-2.2, fig. 4 | 1-6 |
| A | GATT, Remaining issues on CSI-RS, 3GPP TSG RAN WG1 adhoc_NR_AH_1709 R1-1715806, 12 September 2017, sections 2.3-2.3, fig. 2 | 1-6 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.09.2020 | 24.09.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

| | International application No. |
|---|---|
| | PCT/JP2020/010900 |

| Patent Documents referred to in the Report | Publication Date | Patent Family | Publication Date |
|---|---|---|---|
| JP 2016-531495 A | 06.10.2016 | US 2016/0028448 A1 paragraphs [0102], [0103], [0107], [0198], fig. 8 EP 3029847 A1 CN 105229932 A KR 10-2016-0039144 A | |
| JP 2013-533670 A | 22.08.2013 | US 2013/0070719 A1 paragraphs [0100]-[0102], fig. 9 EP 2579664 A1 CN 102263723 A KR 10-2013-0040933 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010